# EUROPEAN PATENT APPLICATION

(11) **EP 2 048 492 A1**
(43) Date of publication of application: **15.04.2009**
(21) Application number: 08017836.1
(22) Date of filing: 10.10.2008
(51) Int. Cl.: G01N 21/65

(54) **Microstructure and method of manufacturing the same**

(30) Priority: 10.10.2007 JP 2007264320
(71) Applicant: FUJIFILM Corporation, Minato-ku Tokyo (JP)
(72) Inventor: Tomaru, Yuichi, Ashigara-kami-gun Kanagawa (JP)
(74) Representative: Höhfeld, Jochen

(57) **Abstract**

The method of manufacturing a microstructure for application in surface-enhanced Raman scattering (SERS) having metal microbodies which generate an enhanced electric field includes: forming, in a substrate (12,112), micropores (14a,114a) each of which opens out on a surface of the substrate (12s,112s), has an inside diameter that varies in a depth direction, and has in a tip portion thereof a narrower, outwardly projecting recess; filling the micropores with metal to form the metal microbodies each having at a tip portion thereof a projection made of the metal filled into the outwardly projecting recess, and removing at least part of the substrate from a metal microbody tip portion side to expose at least the projection at the tip portion of each of the metal microbodies. The resulting microstructure has metallic nanostructural elements that generate an enhanced electric field by an antenna effect at their pointed tips.

## Description

The entire contents of all documents cited in this specification are incorporated herein by reference.

### BACKGROUND OF THE INVENTION

The present invention relates to a method of manufacturing a microstructure having metal microbodies which generate an enhanced electric field, and to a microstructure manufactured by such a method.

Raman spectroscopy is a technique, used for identifying substances and other purposes, in which scattered light obtained by irradiating a substance with monochromatic light is spectrally analyzed to give a spectrum of Raman scattered light (a Raman spectrum). Because such Raman scattered light is very weak, a method for achieving a surface-enhanced Raman scattering (SERS) effect has been proposed, wherein such Raman scattered light is enhanced by utilizing the local plasmon resonance (plasmon effect) that arises from nanometer-order metallic microstructural elements (referred to below as a "metallic nanostructural elements").

In addition, it is known that, in interstices of not more than 10 nm between neighboring metal fine particles and voids of a similar size in aggregates of fine metal particles, the enhanced electric field due to the plasmon effect is further strengthened by a proximity effect. By placing a substance in these interstices or voids, a SERS effect can be obtained.

JP 2005-172569 A describes a microstructure having such metallic nanostructural elements, which microstructure is manufactured by forming a plurality of micropores on a surface layer of a substrate at a spacing of one micron or less, filling each micropore with metal by plating treatment, forming "heads" which protrude from the substrate surface and are larger than the diameter of the micropores, and carrying out plating treatment until the gaps between the heads are 10 nm or less, thus enabling the microstructure to achieve an enhanced electric field by a proximity effect.

Methods that further increase the enhanced electric field by the plasmon effect without utilizing the proximity effect are also conceivable. One such approach that is known to the art entails manufacturing metallic nanostructural elements having pointed tips and utilizing an antenna effect that concentrates the electric field at the pointed tips.

JP 6-342946 A discloses a tool for surface-enhanced plasmon spectroscopic analysis which is characterized by having, as such a pointed tip structure, a plurality of projections that are arrayed in close proximity on a substrate and the surfaces of which are coated with a metal film. JP 6-342946 A also describes the manufacture of a tool for surface-enhanced plasmon spectroscopic analysis in which needle-like crystals of zinc oxide are produced on a base plate, and a metal coat is formed on the needle-like crystals.

### SUMMARY OF THE INVENTION

However, when the proximity effect is employed as in JP 2005-172569 A, it is necessary to place the substance to be measured in the interstices (voids) of 10 nm or less formed by the microstructure. If the size of the substance to be measured is larger than the interstices, the substance to be measured does not enter the interstices, as a result of which a SERS effect cannot be suitably achieved, making it impossible to obtain sufficient Raman signals. That is, when the proximity effect is employed, there are limitations on the size of the substance to be measured.

On the other hand, in cases where the antenna effect is employed, it is necessary to create structures having pointed tips. Yet, manufacturing metallic nanostructural elements that have pointed tips on a nanometer-order scale is very difficult.

The method disclosed in JP 6-342946 A produces needle-like crystals of zinc oxide on a base plate, and forms a metal coat on the needle-like crystals. However, even when a metal is coated onto the surface of the zinc oxide needles, obtaining a uniform metal coat at the tips of the needles is not easy, making it a considerable challenge to manufacture metallic nanostructural elements having pointed tips.

It is therefore an object of the present invention to provide a novel method of manufacturing a microstructure having metallic nanostructural elements that generate an enhanced electric field by an antenna effect at pointed tips thereof. Another object of the invention is to provide a microstructure manufactured by such a method.

In order to achieve the first object, a first aspect of the invention provides a method of manufacturing a microstructure having metal microbodies which generate an enhanced electric field, the method comprising: a micropore forming step for forming, in a substrate, micropores each of which opens out on a surface of the substrate, has an inside diameter that varies in a depth direction, and has in a tip portion thereof a narrower, outwardly projecting recess; a metal filling step for filling the micropores with metal to form the metal microbodies each having at a tip portion thereof a projection made of the metal filled into the outwardly projecting recess; and an exposure step for removing at least part of the substrate from a side of the tip portion of each of the metal microbodies to expose at least the projection at the tip portion of each of the metal microbodies.

According to the first aspect of the invention, the micropore forming step is preferably carried out using at least one technique selected from among anodization, electron beam lithography, nanoimprint lithography, and near-field optical lithography.

The metal filling step is preferably carried out using one treatment selected from among electroplating, electroless plating, and a combination of vapor deposition or sputtering with hot-melt treatment.

The exposure step is preferably carried out by wet etching or dry etching.

Preferably, the micropore forming step includes using anodizing treatment to form the micropores, and the outwardly projecting recess in each of the micropores has a multiply-divided, narrower branched shape.

The micropore forming step preferably includes forming in each of the micropores, by the anodizing treatment, a portion of substantially constant inside diameter, then carrying out current recovery treatment comprising intermittent lowering of voltage applied in the anodizing treatment to form, in the tip portion of each of the micropores continuous with the portion of substantially constant inside diameter, a divided recess having the multiply-divided, narrower branched shape.

The metal filling step preferably includes carrying out electroplating treatment to induce each of the metal microbodies to grow from the outwardly projecting recess at the tip portion of each of the micropores.

Preferably, the method further comprises, between the metal filling step and the exposure step, a step of placing a base plate on a side of the surface of the substrate.

The micropore forming step preferably forms the micropores in such a way that the inside diameter of each of the micropores narrows in the depth direction from the surface of the substrate, including in the outwardly projecting recess of the tip portion.

The micropores preferably have a tapered shape with a substantially constant angle of taper.

Preferably, the method further comprises, between the metal filling step and the exposure step, a step of placing a base plate on a side of the surface of the substrate, and the exposure step removes all of the substrate.

The substrate is preferably a dielectric substrate.

A first mode of a second aspect of the invention provides a microstructure comprising: a base plate; and at least one metal microbody which is disposed on the base plate, includes a columnar element that extends in a height direction and a divided projecting element which is provided at a tip portion continuous with the columnar element and has a multiply-divided, narrower branched shape, and generates an enhanced electric field.

In the first mode of the second aspect of the invention, it is preferred for the microstructure to further comprise a substrate having at least one micropore in which is buried the columnar element of the at least one metal microbody except at least the multiply-divided projecting element at the tip portion of the at least one metal microbody.

A second mode of the second aspect of the invention provides a microstructure comprising: a base plate; and at least one metal microbody which is disposed on the base plate, has an outside diameter that narrows from a base end on a base plate side toward a tip portion having a projection with a sharply tapered shape, and generates an enhanced electric field.

In the second mode of the second aspect of the invention, it is preferred for the microstructure to further comprise a substrate having at least one micropore in which is buried a portion of the at least one metal microbody where the outside diameter narrows from the base end thereof on the base plate side toward the tip portion except at least the projection having the tapered shape at the tip portion of the at least one metal microbody.

In the second aspect of the invention, the at least one metal microbody comprises a plurality of metal microbodies uniformly arranged on the base plate.

The method of manufacturing a microstructure according to the first aspect of the invention enables a microstructure having a metal microbody which generates an enhanced electric field to be manufactured by forming, in a substrate, a micropore which opens out on a surface side of the substrate, has an inside diameter that varies in a depth direction, and has in a tip portion thereof a narrower, outwardly projecting recess; subsequently filling the micropore with metal to form a metal microbody having at a tip portion thereof a projection made of the metal filled into the narrower, outwardly projecting recess; then removing at least part of the substrate from a metal microbody tip portion side thereof to expose at least the projection at the tip portion of the metal microbody.

According to a first embodiment of the second aspect of the invention, there can be provided a microstructure which is able to utilize the antenna effect to generate an enhanced electric field by having a metal microbody disposed on a base plate, the metal microbody including a columnar element which extends in a height direction and a divided projecting element which is provided at the tip potion continuous with the columnar element and has a multiply-divided branched shape that is narrower than the columnar element.

According to a second embodiment of the second aspect of the invention, there can be provided a microstructure which is able to utilize the antenna effect to generate an enhanced electric field by having a metal microbody disposed on a base plate, the metal microbody having an outside diameter that narrows from a base end on the base plate side toward a tip portion having a projection with a sharply tapered shape.

Since an enhanced electric field is generated by the antenna effect in a region peripheral to a narrower projection, such as a pointed tip, the microstructures according to the first and second embodiments of the second aspect of the invention are not subject to size limitations for the substance placed in the enhanced electric field generating region. Even large-size substances, such as those exceeding 10 nm that have been difficult to place inside the enhanced electric field generating region in a microstructure which utilizes the proximity effect, can be easily placed within the enhanced electric field generating region.

### BRIEF DESCRIPTION OF THE DRAWINGS

FIG. 1 is a perspective, cross-sectional view which schematically shows an embodiment of the microstructure according to the present invention;
FIGS. 2A to 2G are process diagrams which schematically show an embodiment of the microstructure manufacturing method according to the present invention;
FIG. 3 is a cross-sectional diagram which schematically shows another embodiment of the microstructure according to the invention;
FIGS. 4A to 4G are process diagrams which schematically show an embodiment of the microstructure manufacturing method according to the present invention;
FIG. 5 is a cross-sectional view of a variation of the microstructure shown in FIG. 3;
FIG. 6 is a graph showing the results of current value measurements in current recovery treatment; and
FIG. 7 is a scanning electron micrograph of metal microbodies manufactured by the microstructure manufacturing method illustrated in FIGS. 2A to 2G.

### DETAILED DESCRIPTION OF THE INVENTION

The microstructure manufacturing method of the present invention and microstructures manufactured by this method are described in detail below based on the preferred embodiments shown in the accompanying diagrams.

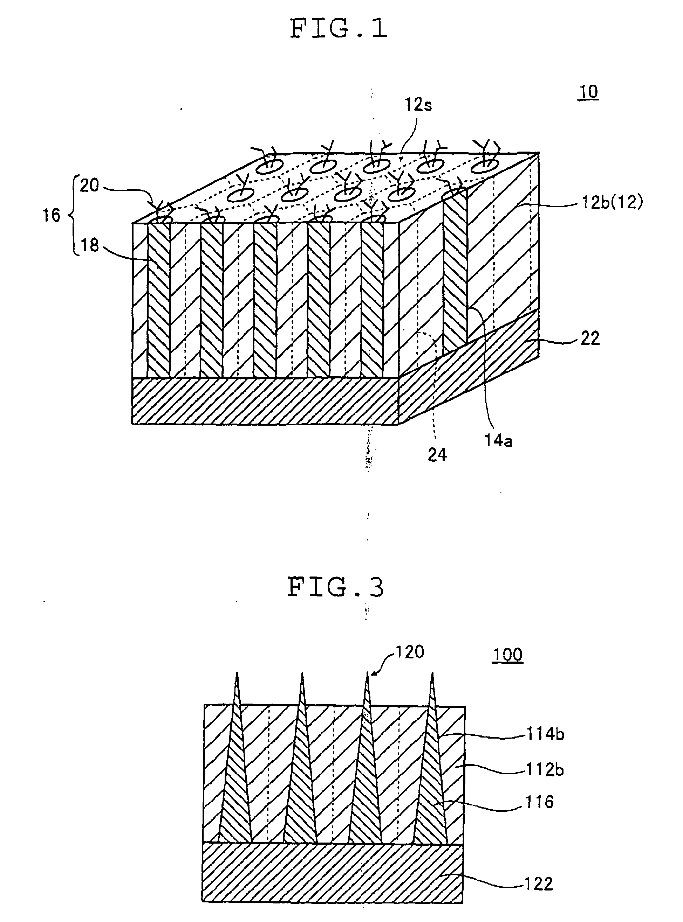

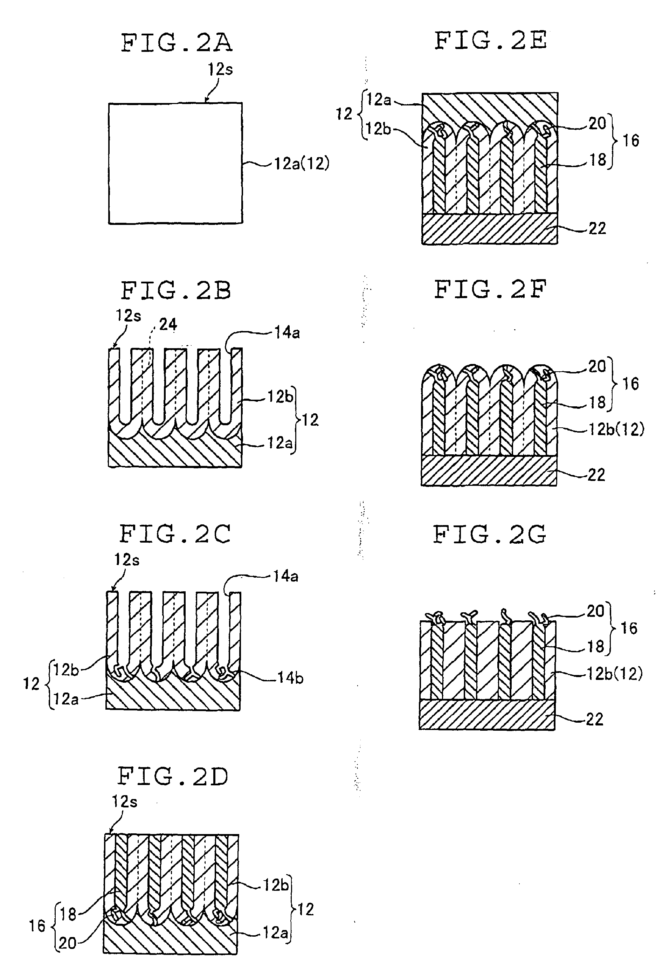

FIG. 1 is a perspective, cross-sectional view which schematically shows an embodiment of a microstructure according to the present invention. FIGS. 2A to 2G are process diagrams which illustrate, as an embodiment of the inventive microstructure manufacturing method, the steps in the manufacture of the microstructure shown in FIG. 1.

Referring to FIG. 1, a microstructure 10 has a base plate 22 and, disposed on the base plate 22, both a dielectric substrate 12b in which have been formed a plurality of regularly arranged micropores 14a that open out onto a surface of the base plate 22 and a plurality of metal microbodies 16, each having a columnar element 18 and a multiply-divided projecting element 20 with a narrower, branched shape that extends from the column 18.

The microstructure 10, by having a divided projecting element 20 which extends out at the tip of the metal microbody 16, is capable of utilizing the antenna effect to generate an enhanced electric field.

In the present embodiment, the dielectric substrate 12b is a dielectric plate-like member composed primarily of alumina (Al₂O₃). The dielectric substrate 12b is obtained by subjecting an anodizable metal substrate 12a (see FIG. 2A) composed primarily of aluminum (Al) to the subsequently described anodizing treatment to effect oxidation (see FIG. 2B).

A plurality of micropores 14a are formed so as to be substantially uniformly arrayed on the dielectric substrate 12b. In this embodiment, the plurality of micropores 14a are formed by subjecting the anodizable metal substrate 12a to anodizing treatment.

Here, the pitch between neighboring micropores 14a and the diameter of the micropores 14a are not subject to any particular limitation, provided the pitch between neighboring micropores 14a, the shapes of the individual micropores 14a and the diameter of the micropores 14a are in respective ranges which can be controlled so as to be substantially uniform. By way of illustration, the pitch between neighboring micropores 14a may be within a range of from 10 to 500 nm, and the diameter of the micropores 14a may be from 5 to 400 nm.

In the present embodiment, the dielectric substrate 12b is composed primarily of alumina. However, the dielectric substrate 12b is not limited to alumina, and is rather a metal oxide obtained by oxidizing, via anodizing treatment, a metal which is capable of being anodized as the anodizable metal substrate 12a (see FIG. 2). Any metal capable of being anodized may be used as the anodizable metal substrate 12a. Examples of suitable metals other than aluminum include titanium, tantalum, hafnium, zirconium, silicon, indium and zinc. Two or more of these metals (including aluminum) may be included.

The metal microbody 16 has a columnar element 18 where the interior of the micropore 14a has been filled, and a divided projecting element 20 which extends from a tip of the columnar element 18.

The columnar element 18 is a columnar metal member which has the same diameter as the micropore 14a, has a base end on the base plate 22 side, and extends to an outwardly opening side in the dielectric substrate 12b.

The divided projecting element 20 extends from the tip of the columnar element 12. The divided projecting element 20 has a smaller outside diameter than the columnar element 18, and has one or more projections with a branched shape that divide off the tip of the columnar element 18. The one or more projections having a branched shape in turn include, at a tip thereof dividing off the tip of the columnar element 18, a projection having a multiply-divided shape.

In the divided projecting element 20, the respective projections having a branched shape which branch from the tip of the columnar element 18 extend in basically different directions, with each tip of the branching projections oriented in basically different directions. Of course, in the present embodiment, some of the respective tips on the branching projections may be oriented in the same direction.

The metal microbody 16 thus has a divided projecting element 20 with a smaller diameter than the columnar element 18 and multiply-divided, branching projections, the tips of which projections are sharply pointed. Hence, owing to local plasmon resonance at the sharply pointed tips, i.e., at the divided projecting element 20, electric field concentration occurs at the divided projecting element 20, generating an enhanced electric field (antenna effect) at the periphery of the divided projecting element 20.

The branched projections in the divided projecting element 20 have a diameter which is not subject to any particular limitation, provided it is a value that enables an electric field enhancing effect to be advantageously obtained, and may be suitably shaped according to such factors as the metal used in the metal microbody 16 and the desired strength of the enhanced electric field. The divided projecting element 20 is preferably one having a more sharply pointed shape.

The metal microbody 16 may be made of any metal which generates local plasmon resonance. Examples of metals which readily generate local plasmon resonance include gold, silver, copper, platinum, nickel, titanium and aluminum. Metals such as gold and silver which have a high electric field enhancing effect are especially preferred.

The base plate 22 supports the dielectric substrate 12b and a plurality of metal microbodies 16. The base plate 22 is not subject to any particular limitation, and may be suitably selected according to the microstructure 10 manufacturing process or intended application. For example, when an etching step is included among the microstructure 10 manufacture operations, it is preferable for the base plate to have etch resistance. Alternatively, when the microstructure 10 is to be used in Raman spectroscopy, it is preferable for the base plate to be one which does not exert an influence on the measurement results.

Illustrative examples of the base plate include silicon, glass, stainless steel (SUS), yttrium-stabilized zirconia (YSZ), sapphire and zirconium carbide.

Because the microstructure 10 of the present embodiment has a divided projecting element 20 which extends from the end of the columnar element 18 and is narrower than the columnar element, the metal microbody 16 has sharply pointed tips. Due to the antenna effect which concentrates the electric field at the divided projecting element 20 where such sharply pointed tips are formed, an enhanced electric field can be generated in the region peripheral to the divided projecting element 20.

However, when a microstructure which generates an enhanced electric field is used in a Raman scattering spectrometer, to obtain a SERS effect, it is necessary that the substance to be measured be placed in the enhanced electric field generating region. As noted above, in microstructures which utilize the proximity effect, it has been difficult to place large substances exceeding 10 nm in size within the enhanced electric field generating region. By contrast, with the microstructure 10 of the present embodiment, because an enhanced electric field is generated in a region peripheral to the divided projecting elements 20, by setting the substance to be measured on the divided projecting elements 20, placement within the enhanced electric field-generating region is possible. As a result, even a substance having a size larger than 10 nm can be placed within the enhanced electric field generating region. The microstructure 10 of the present embodiment is thus advantageous in that the substance placed in the enhanced electric field generating region is not subject to any particular size limitations.

Also, because the divided projecting element 20 extends from the end of the columnar element 18 in a plurality of directions, enabling an enhanced electric field to be generated at the branched projects which are each sharply pointed, the enhanced electric field generating region can be expanded in the planar direction of the substrate 12.

Moreover, because the metal microbodies 16 are substantially uniformly arranged, the enhanced electric field generating region can be arranged in a substantially uniform manner within the plane of the substrate 12.

In the microstructure 10 of the present embodiment, because the metal microbodies 16 having branched projections with sharply pointed tips are regularly arrayed, a more highly stable electric field enhancing effect can be achieved than in metallic nanostructural elements obtained by the simple dispersion of metal fine particles, metallic nanostructural elements having an islandlike structure, and microstructures having a non-uniform shape in the planar direction, such as a grained metal surface.

Next, a method of manufacturing the microstructure 10 is described below, in conjunction with FIGS. 2A to 2G, as an embodiment of the inventive microstructure manufacturing method. FIGS. 2A to 2G show cross-sectional diagrams which schematically illustrate a method of manufacturing a microstructure. The diagrams show portions of a microstructure 10 and of intermediate structures in respective steps of the manufacturing method according to the present embodiment.

As shown in FIG. 2A, an anodizable metal substrate 12a is furnished as the substrate. In the present embodiment, aluminum is used as the main ingredient of the anodizable metal substrate 12a. In the present embodiment, "the main ingredient of the anodizable metal substrate 12a" refers to an ingredient which accounts for at least 90% of the ingredients making up the anodizable metal substrate 12a.

Next, the anodizable metal substrate 12a is subjected to anodizing treatment, thereby forming, as shown in FIG. 2B, a dielectric substrate 12b in which a plurality of micropores 14a have been created.

Anodizing treatment may be carried out, for example, by using the anodizable metal substrate 12a as the anode and using carbon, aluminum or the like as the cathode (counter electrode), immersing these electrodes in an electrolytic solution for anodization and applying a voltage across the anode and the cathode. The electrolytic solution is not subject to any particular limitation, although preferred use can be made of an acidic electrolytic solution containing one or more acid, such as sulfuric acid, phosphoric acid, chromic acid, oxalic acid, sulfamic acid, benzenesulfonic acid and amidosulfonic acid.

When the anodizable metal substrate 12a is anodized, the oxidation reaction proceeds in a substantially vertical direction from the surface 12s (top face shown), forming a dielectric substrate 12b composed primarily of alumina.

The dielectric substrate 12b formed by anodization has a structure in which columnar cells 24 having a substantially regular hexagonal shape, as seen from above, (see FIG. 1) are contiguously arrayed. At substantially the center of the respective columnar cells 24, micropores 14a of substantially identical diameter extend in the depth direction from the surface of the dielectric substrate 12b. Here, the purpose of the micropores 14a of substantially identical diameter is to form the columnar elements 18 of the metal microbodies 16 in the microstructure 10 shown in FIG. 1.

The bottom face of each columnar cell 24, which is the interface between the anodizable metal substrate 12a that is an unanodized portion of the substrate 12 and the dielectric substrate 12b, has a rounded shape. The structure of the alumina layer created by anodization is described, for example, by H. Masuda in "The preparation of mesoporous alumina by anodization, and its use as a functional material" (Zairyo Gijitsu 15, No. 10, p. 34 (1997)).

In the present embodiment, the anodizing treatment conditions should be conditions that enable the formation of a dielectric substrate 12b (mesoporous alumina) in which a plurality of uniformly arrayed micropores 14a have been formed. When oxalic acid is used as the electrolytic solution, the preferred conditions are, for example, an electrolytic solution concentration of 0.5 M, a solution temperature of 15°C, and an applied voltage of 40 V.

By varying the electrolysis time in anodizing treatment, it is possible to form a dielectric substrate 12b of any layer thickness. In the present embodiment, the electrolysis time is set so as to at least allow an anodizable metal substrate 12a to remain.

In anodizing treatment, the pitch between mutually neighboring micropores 14a may be controlled within a range of from 10 to 500 nm, and the diameter of the micropores 14a may be controlled within a range of from 5 to 400 nm. JP 2001-9800 A and JP 2001-138300 A disclose methods for controlling the positions where the micropores are formed and the diameter of the micropores. By using these methods, micropores of any diameter within the above-indicated range can be formed in a substantially well-ordered array.

Next, current recovery treatment is carried out, thereby forming, as shown in FIG. 2C, divided recesses 14b having branched shapes which divide multiply from the ends of the micropores 14a and are narrower than the micropores 14a.

In the present embodiment, "current recovery treatment" refers to carrying out anodizing treatment on the anodizable metal substrate 12a by intermittently reducing the voltage applied in the above-described anodizing treatment.

Specifically, using the above anodizing treatment, a constant voltage is applied so as to form micropores 14a. When a voltage that is lower than the initial applied voltage is subsequently applied, the current value decreases. By continuing to apply a voltage, recesses having a smaller inside diameter than the micropores 14a are formed from the tips of the micropores 14a, and the current value gradually increases.

When the rise in the current value eases or the current value becomes constant, an even lower voltage than the voltages previously applied is applied, thereby forming even narrower recesses. Voltage continues to be applied and, when the increase in the current value becomes gradual or the current value becomes constant, the applied voltage is again reduced.

By thus carrying out, in anodizing treatment, a current recovery treatment operation wherein the applied voltage is intermittently reduced, divided recesses 14b having branched shapes which gradually narrow toward the tips thereof can be formed.

The divided recesses 14b formed in this way are very small voids (recesses) that serve as templates for the formation of the divided projecting elements 20 of the above-described metal microbodies 16. The divided recesses 14b are recesses of a smaller diameter than the micropores 14a, and themselves have recesses of a branched shape which are divided into one or more branches from the ends (bottom faces) of the micropores 14a. The recesses of branched shape in the divided recesses 14b additionally include, at divided ends from the ends of the micropores 14a, recesses of multiply-divided shapes. The divided recesses 14b are formed so as to be oriented in basically different directions, and the respective ends of the recesses of branched shape are oriented in basically mutually different directions. Of course, it should be noted that, in the present embodiment, some of the ends of the recesses of branched shape may be oriented in the same direction.

The divided recesses 14b of branched shape have inside diameters which are substantially the same as the outside diameter of the branch-like projections of the divided projecting elements 20, and are preferably in a range of 200 nm or less.

The current recovery treatment involves repeatedly carrying out a step wherein a voltage lower than the voltage that had been applied in anodizing treatment is applied until the rise in the current value eases or the current value becomes constant. Factors such as the number of times this step is repeated and the applied voltage in each such step may be suitably set in accordance with anodization conditions such as the material of which the anodizable metal substrate is made, the type of electrolytic solution, and the concentration and temperature of the electrolytic solution, and in accordance with the shape of the micropores 14a to be formed.

For example, aluminum may be used as the anodizable metal substrate, and oxalic acid may be used as the electrolytic solution. The current recovery treatment conditions in such a case are described by T. Sato in "Alumite Theory, 100 Questions and Answers: Theoretical Foundations of Alumite Technology."

Next, electroplating treatment is carried out so as to fill, as shown in FIG. 2D, the interior of each of the plurality of micropores 14a and divided recesses 14b with metal, and thereby form a metal microbody 16 in each individual micropore 14a and divided recess 14b.

In this embodiment, by carrying out electroplating treatment using the anodizable metal substrate 12a of the substrate 12 as the electrode, deposition can be preferentially effected from the divided recesses 14b where the electric field is strong. By continuously carrying out electroplating treatment, metal is first filled into the divided recesses 14b, forming the divided projecting elements 20 of the metal microbodies 16. Next, metal is then filled into the micropores 14a, forming the columnar elements 18 of the metal microbodies 16. The interior of the micropores 14a and the interior of the divided recesses 14b are thus filled in this way with metal, resulting in the formation of metal microbodies 16.

Next, as shown in FIG. 2E, the substrate 12 in which metal microbodies 16 have been formed is placed on a base plate 22 with the surface 12s side facing down. An adhesive may be used to secure the substrate 12 to the base plate 22. The adhesive used for this purpose should be, as described subsequently, one having resistance to the treatment solution used in the wet etching step in which a portion of the substrate 12 is removed. For example, use may be made of various known resin-based adhesives.

Next, as shown in FIG. 2F, the anodizable metal substrate 12a portion of the substrate 12 is removed. In this step, wet etching or dry etching may be used, so long as the method used is one which is able to remove the anodizable metal substrate 12a. In the present embodiment, the aluminum anodizable metal substrate 12a is removed by wet etching.

Next, as shown in FIG. 2G, at least part of the dielectric substrate 12b portion of the substrate 12 is removed from the metal microbody 16 tip side thereof, exposing the divided projecting elements 20 of the metal microbodies 16. In this step, use should be made of a method which is capable of removing only the dielectric substrate 12b without removing the divided projecting elements 20 of the metal microbodies 16. That is, the dielectric substrate 12b alone should be selectively removed by, for example, wet etching or dry etching.

As shown in FIGS. 2F and 2G, the microstructure 10 is manufactured by removing a portion of the substrate 12 from the side where the divided projecting elements 20 of the metal microbodies 16 have been formed (tip side) so as to expose the divided projecting elements 20.

By carrying out, according to the method of manufacturing a microstructure 10 of the present embodiment, a process that includes forming in a substrate 12 a plurality of micropores having branch-like recesses with sharply pointed tips, subsequently filling these plurality of micropores with metal to form a plurality of metal microbodies 16 having branch-like projections with sharply pointed tips, then removing at least a portion of the substrate 12 from the tip side of the metal microbodies 16 in the depth direction of the micropores to expose at least the sharply pointed branch-like projections of the metal microbodies 16, a microstructure 10 which generates an enhanced electric field can be manufactured.

In particular, in the present embodiment, by carrying out current recovery treatment after formation of the micropores 14a by anodizing treatment, divided recesses 14b having sharply pointed tips can be formed. By filling these divided recesses 14b with metal, metal microbodies 16 having divided projecting elements 20 with sharply pointed tips can be formed. That is, with the present embodiment, it is possible to manufacture a novel microstructure 10 having divided projecting elements 20 with sharply pointed tips.

Also, in the present embodiment, by carrying out electroplating treatment using the anodizable metal substrate 12a as the electrode and thus filling the micropores 14a and the divided recesses 14b with metal, deposition can be preferentially induced from the divided recesses 14b where the electric field is strong, enabling the metal to be reliably filled into each of the divided recesses 14b, and in turn enabling divided projecting elements 20 which are substantially uniform in the planar direction of the substrate 12 to be formed without irregularities due to plating treatment.

Also, by removing a portion of the substrate 12 from the side where the divided projecting elements 20 of the metal microbodies 16 have been formed (the tip side) and thus exposing the divided projecting elements 20 that were substantially uniformly formed using the divided recesses 14b as templates, a microstructure having divided projecting elements 20 which are substantially uniformly arranged in the planar direction of the substrate 12 can be manufactured.

In the present embodiment, the micropores 14a and the divided recesses 14b can be easily formed even in a substrate 12 having a large surface area by anodizing treatment and current recovery treatment, thus making it possible to easily form a plurality of metal microbodies 16. That is, using the method of the present embodiment, a novel microstructure 10 according to the invention can be easily manufactured to a large surface area.

In the present embodiment, the step in which metal is filled to form metal microbodies is carried out by electroplating treatment. However, the invention is not limited in this regard. For example, metal filling may be carried out by electroless plating treatment. Alternatively, the metal microbodies 16 may be formed by filling the interior of the micropores 14a and divided recesses 14b with a metal, then carrying out heat treatment to heat and melt the metal.

In the present embodiment, the micropores 14a and divided recesses 14b which serve as templates for the formation of metal microbodies 16 having sharply pointed tips are formed by subjecting the anodizable metal substrate to anodizing treatment and current recovery treatment. However, the invention is not limited in this regard. Use may instead by made of other methods capable of manufacturing microstructures, such as electron beam (EB) lithography, near-field optical lithography and nanoimprint lithography.

For example, by using an etching operation to form columnar micropores which extend in the depth direction, then employing a microfabrication technique such as electron beam lithography or near-field optical lithography, a plurality of recesses (voids) having an inside diameter smaller than that of the columnar micropores are formed in the depth direction at the bottom of the micropores. By filling metal into the recesses and micropores formed in this way, it is possible to form a plurality of metal microbodies which, because they each have both a columnar element and, at the tip of the columnar element, a divided projecting element that has a diameter smaller than the columnar element, extends in a branched shape in the lengthwise direction of the columnar element and has a plurality of projections, possess sharply pointed tips. Alternatively, templates with a shape similar to the micropores having branch-like recesses at the end can be produced by nanoimprint lithography using a suitable material such a resin.

In the present embodiment, anodizing treatment is used to form in the substrate micropores having branch-like recesses at the tips thereof. However, when a method other than anodizing treatment is used, the substrate material is not limited to the above-mentioned anodizable metals. Use may instead be made of a material which, depending on the method employed, can be microfabricated and which can be removed by a technique such as dry etching or wet etching.

Another embodiment of the microstructure according to the present invention is described below.

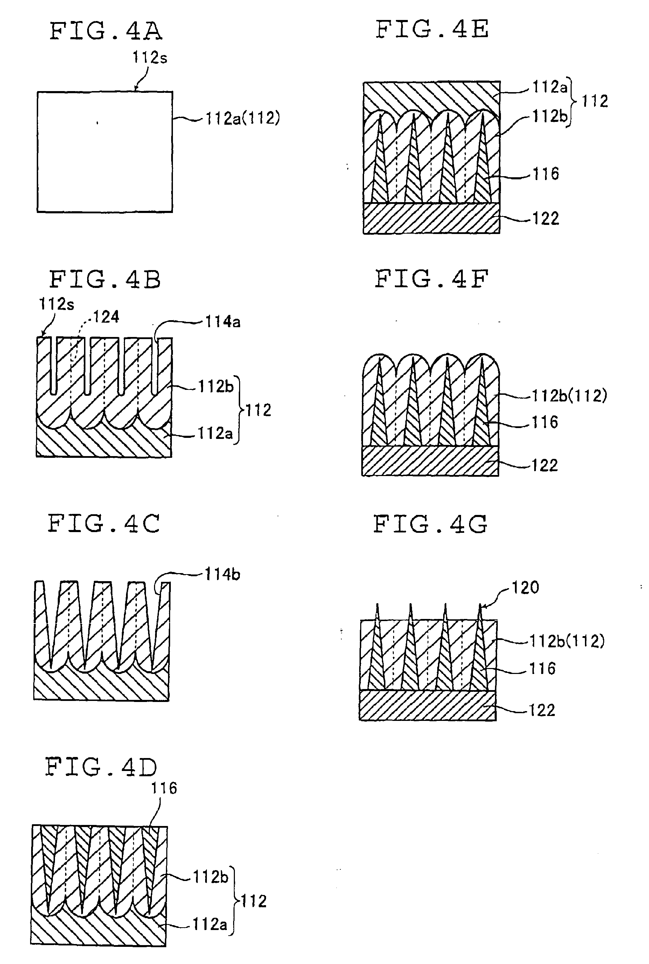

FIG. 3 is a cross-sectional view which schematically shows a microstructure 100 according to this embodiment. FIGS. 4A to 4G are process diagrams which illustrate, as another embodiment of the microstructure manufacturing method according to the invention, operations in the manufacture of the microstructure shown in FIG. 3.

Referring to FIG. 3, a microstructure 100 has a base plate 122 and, disposed on the substrate 122, a dielectric substrate 112b having formed therein a plurality of regularly arrayed micropores 114b, and a plurality of metal microbodies 116. Aside from having tapered micropores 114b at the interior of which tapered metal microbodies 116 are formed for the purpose of generating an enhanced electric field by utilizing the antenna effect at sharply pointed tips (tip projections 120) of the tapered metal microbodies 116, the microstructure 100 of the present invention is similar to the microstructure 10 according to the earlier described embodiment of the invention. Accordingly, the following description emphasizes those features which are different.

In the present embodiment, the dielectric substrate 112b, like the dielectric substrate 12b in the earlier described embodiment of the inventive microstructure, is a dielectric plate-like member obtained by employing anodizing treatment to anodize an anodizable metal substrate 112a (see FIG. 4B). A plurality of tapered micropores 114b are formed in a substantially uniform array on the dielectric substrate 112b. The micropores 114b have a tapered shape with a substantially constant angle of taper.

In the present embodiment, the plurality of micropores 114b are formed by subjecting the metal substrate 112a to anodizing treatment, followed by dry etching. This process is described more fully later in the specification.

The metal microbodies 116 have a sharply tapered shape with a diameter that decreases from the base plate 122 as a base end thereof toward a tip at the same angle of taper as the micropores 114b, and have tip projections 120 with a sharply tapered shape that protrude from the dielectric substrate 112b. Because the tip projections 120 have a sharply tapered shape, the metal microbodies 116 concentrate an electric field at the tip projections 120 by local plasmon resonance at the tip projections 120, thereby generating an enhanced electric field at the periphery of the tip projections 120 (antenna effect).

The base plate 122, which supports the substrate 112b and a plurality of the metal microbodies 116, may be fundamentally similar to the base plate 22 used in the earlier described embodiment of the inventive microstructure. The base plate 122 in the present embodiment, as with the base plate 22 in the earlier embodiment, is not subject to any particular limitation and may be suitably selected according to such considerations as the method of manufacturing the microstructure 100 and the intended use for the microstructure 100.

With the microstructure 100 of the present embodiment, the tips of the metal microbodies 116 are sharply pointed owing to a tapered shape wherein the diameter decreases from the base plate 122 as the base end toward the tip. An enhanced electric field can be generated in the region peripheral to the tip projections 120 by the antenna effect which concentrates the electric field at the sharply pointed tip projections 120.

Moreover, because an enhanced electric field is generated in the region peripheral to the tip projections 120, by setting the substance to be measured on the tip projections 120, placement of the substance within the enhanced electric field generating region is possible. Therefore, as with the microstructure 10 according to the earlier-described embodiment of the invention, even large substances having a size greater than 10 nm can easily be placed within the enhanced electric field generating region.

A method of manufacturing a microstructure 100 according to an embodiment of the inventive microstructure manufacturing method is described below. In the method of manufacturing a microstructure 100 according to the present embodiment, unlike the method of manufacturing the microstructure 10 shown in FIGS. 2A to 2G, micropores 114b having a given tapered shape with a sharply pointed tip are formed on a substrate 112, and metal microbodies 116 are formed using these micropores 114b having a tapered shape as a template. An example of a method of forming the micropores 114b having a tapered shape is described below in conjunction with FIGS. 4A to 4G, in addition to which a method of manufacturing the microstructure 100 is also described.

First, as shown in FIG. 4A, an anodizable metal substrate 112a is furnished as the substrate.

Next, the anodizable metal substrate 112a is subjected to anodizing treatment, thereby giving a dielectric substrate 112b in which a plurality of micropores 114a have been formed (FIG. 4B). In this embodiment as well, by anodizing the anodizable metal substrate 112a, the oxidation reaction proceeds in a substantially vertical direction from the surface 112s (top face in the diagram), resulting in the formation of the dielectric substrate 112b. The dielectric substrate 112b formed by anodization, as in the case of the microstructure 10 manufactured according to the earlier described embodiment, has a structure in which columnar cells 124 having a substantially regular hexagonal shape, as seen from above (see FIG. 1), are contiguously arrayed. At substantially the center of the respective columnar cells 124, micropores 114a of substantially identical diameter extend in the depth direction from the surface of the dielectric substrate 112b.

These micropores 114a are then shaped by dry etching, forming micropores 114b having, as shown in FIG. 4C, a tapered shape with a diameter that decreases at a substantially fixed taper angle in the depth direction. The resulting micropores 114b with a tapered shape have a tapered shape with a sharply pointed tip, and serve as templates for the formation of metal microbodies 116 having the above-described sharply pointed tip projections 120.

Next, electroplating treatment is carried out using the anodizable metal substrate 112a of the substrate 112 as an electrode. As shown in FIG. 4D, metal is filled into the interior of each of the plurality of micropores 114b having a tapered shape, thereby forming a metal microbody 116. In this embodiment as well, deposition can be preferentially induced from the tips of the micropores 114b so as to form tapered metal microbodies 116 having sharply pointed tip projections 120.

Next, as shown in FIG. 4E, the substrate 112 in which the metal microbodies 116 have been formed is secured with an adhesive to a base plate 122 with the surface 112s side facing down.

Next, as shown in FIG. 4F, the anodizable metal substrate 112a of the substrate 112 is removed, following which, as shown in FIG. 4G, at least part of the dielectric substrate 112b of the substrate 112 is removed from the tip side of the metal microbodies 116, leaving the tip projections 120 of the metal microbodies 116 exposed.

This is the way in which the microstructure 100 is manufactured.

By carrying out, according to the method of manufacturing microstructures 100 of the present embodiment, a process that includes forming in a substrate 112 a plurality of tapered micropores having tips that are sharply pointed in a tapered shape (needle shape), subsequently filling these micropores with metal so as to form a plurality of metal microbodies 116 having sharply pointed tip projections 120, then removing at least a portion of the substrate 112 from the tip side of the metal microbodies or the bottom side in the depth direction of the micropores so as to expose at least the sharply pointed tip projections 120 of the metal microbodies 116, a microstructure 100 which generates an enhanced electric field can be manufactured.

In particular, in the present embodiment, by using anodizing treatment to form the micropores 114a for forming the tapered micropores 114b, the micropores 114a can be arrayed at equally spaced intervals. In this way, it is possible to also array at equally spaced intervals the tapered micropores 114b and, later, the metal microbodies 116 formed using the tapered micropores 114b as templates.

Moreover, in the present embodiment, by carrying out electroplating treatment using the anodizable metal substrate 112a as the electrode, metal can be reliably filled into each of the tapered micropores 114b, enabling the formation of tip projections 120 which are substantially uniform between the respective micropores 114b without irregularities due to plating treatment.

Also, by removing a portion of the substrate 112 from the tip projection 120 side of the metal microbodies 116 and thus exposing the tip projections 120 that have been substantially uniformly formed, a microstructure of high in-plane uniformity on which the tip projections 120 of the metal microbodies 116 are substantially uniformly arranged in the planar direction of the substrate 112 can be manufactured.

In the present embodiment, anodizing treatment is used to form micropores 114a of substantially uniform diameter in the thickness direction, following which the micropores 114a are used as pilot holes to form tapered micropores 114b by dry etching. However, the invention is not limited in this regard. For example, a method of manufacturing such a structure by repeatedly carrying out anodization and pore size enlarging treatment is disclosed in JP 2005-156695 A.

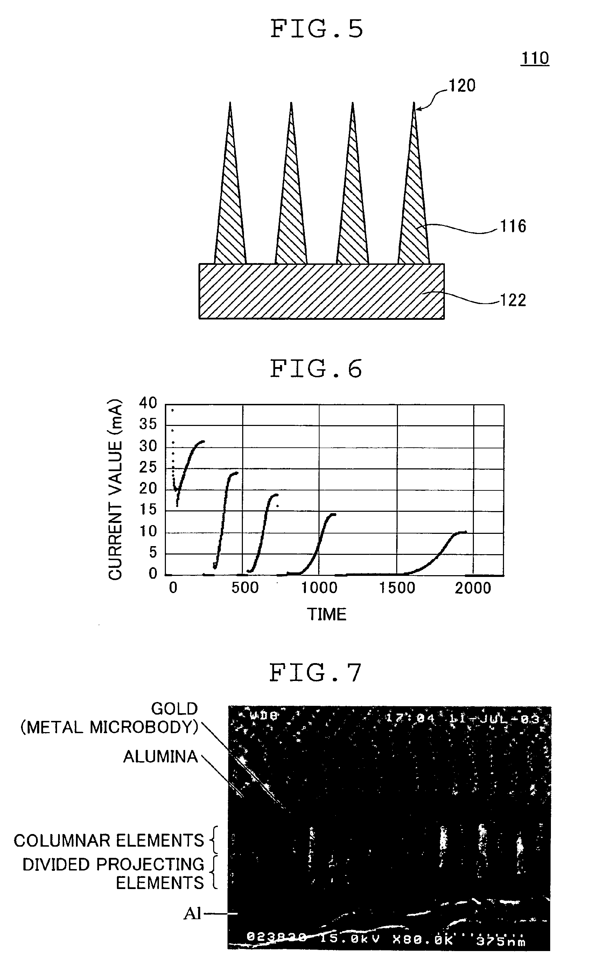

Moreover, in the exposure step of the above-described embodiments, a portion of the substrate (dielectric substrate) is removed so as to expose the sharply pointed tips (the divided projecting elements 20 in FIG. 1, or the tapered tip projections 120 in FIG. 3) of the metal microbodies. However, the invention is not limited in this regard. It is possible instead to remove all of the substrate so as to leave only the base plate and the plurality of metal microbodies arranged on the base plate. For example, as shown in FIG. 5, the dielectric substrate 112b of the microstructure 100 may be entirely removed to form a microstructure 110 having a base plate 122 and a plurality of metal microbodies 116 arranged on the base plate 122. In this case, when carrying out the step of bonding the base plate 122 with the dielectric substrate 112b (see FIG. 4E), it is necessary to render the surface 112s and the base end face of the metal microbodies 116 coplanar such as by polishing the surface 112s, and thereby reliably immobilize the metal microbodies 116 on the base plate 122.

Also, in the above-described embodiments, a substrate in which a plurality of metal microbodies have been formed is placed on the base plate, although the invention is not limited in this regard. So long as the substrate intended to serve as the template for the metal microbodies has a sufficient strength to support the weight of the microstructure itself, a base plate is not always necessary. In such cases, the microstructure may exclude a base plate and may instead be composed of a substrate and metal microbodies formed at the interior of the substrate.

The microstructure according to the present invention may be suitably employed as a Raman spectroscopic device in Raman spectroscopy. The substance to be measured is placed on the tips of the plurality of metal microbodies on the inventive microstructure, light of a specific wavelength is irradiated onto the microstructure from a light irradiating means, and the scattered light that is generated is spectrally analyzed by a spectroscopic means to obtain a Raman scattered light spectrum (Raman spectrum). When the microstructure of the invention is used in this way as a Raman spectroscopic device, the enhanced electric field generated at the periphery of the sharply pointed tips of the metal microbodies enables a SERS effect to be advantageously obtained, making it possible to carry out high-precision Raman spectroscopy.

Although embodiments of microstructure manufacturing methods according to the present invention and embodiments of microstructures according to the invention manufactured by such methods have been disclosed for illustrative purposes, those skilled in the art will appreciate that various modifications and variations are possible without departing from the scope and spirit of the invention.

### EXAMPLES

The microstructure 10 shown in FIG. 1 was manufactured by the microstructure manufacturing method shown in FIG. 2.

In this example, aluminum (Al) was used as the anodizable metal substrate. Anodizing treatment was carried out on this anodizable aluminum substrate. In the present example, the anodizing treatment conditions were as follows: oxalic acid as the electrolytic solution, an electrolytic solution concentration of 0.5 M, a solution temperature of 15°C, and an applied voltage of 40 V.

Next, current recovery treatment was carried out under the following conditions: steps in which the voltage was lowered by 5 volts per step were carried out from 35 V down to 15 V. In this current recovery treatment, the results of current value measurements, which indicate the state of current value recovery, are shown in the graph in FIG. 6.

Next, electroplating treatment was carried out, thereby filling gold (Au) into the micropores and forming metal microbodies. Electroplating treatment was carried out using an aqueous solution of chloroauric acid tetrahydrate as the plating solution and under 11 V of AC power.

FIG. 7 shows a scanning electron micrograph (SEM image) of metal microbodies formed in this way. The SEM image shown in FIG. 7 corresponds to the state shown in FIG. 2D of the microstructure manufacturing process illustrated in FIGS. 2A to 2G.

From the SEM image shown in FIG. 7, it is apparent that each of the metal microbodies has a columnar element of substantially uniform diameter and a divided projecting element of branched shape that extends from the tip of the columnar element. This image thus demonstrates that metal microbodies having divided projecting elements of branched shape, and thus sharply pointed tips, can be formed by the inventive method of manufacturing a microstructure.

## Claims

1. A method of manufacturing a microstructure having metal microbodies which generate an enhanced electric field, said method comprising:
a micropore forming step for forming, in a substrate, micropores each of which opens out on a surface of said substrate, has an inside diameter that varies in a depth direction, and has in a tip portion thereof a narrower, outwardly projecting recess;
a metal filling step for filling said micropores with metal to form the metal microbodies each having at a tip portion thereof a projection made of said metal filled into said outwardly projecting recess; and
an exposure step for removing at least part of said substrate from a side of the tip portion of each of said metal microbodies to expose at least said projection at said tip portion of each of said metal microbodies.

2. The method of claim 1, wherein said micropore forming step is carried out using at least one technique selected from among anodization, electron beam lithography, nanoimprint lithography, and near-field optical lithography.

3. The method of claim 1 or 2, wherein said metal filling step is carried out using one treatment selected from among electroplating, electroless plating, and a combination of vapor deposition or sputtering with hot-melt treatment.

4. The method of any one of claims 1 to 3, wherein said exposure step is carried out by wet etching or dry etching.

5. The method of any one of claims 1 to 4, wherein said micropore forming step includes using anodizing treatment to form said micropores, and said outwardly projecting recess in each of said micropores has a multiply-divided, narrower branched shape.

6. The method of claim 5, wherein said micropore forming step includes forming in each of said micropores, by said anodizing treatment, a portion of substantially constant inside diameter, then carrying out current recovery treatment comprising intermittent lowering of voltage applied in said anodizing treatment to form, in said tip portion of each of said micropores continuous with said portion of substantially constant inside diameter, a divided recess having the multiply-divided, narrower branched shape.

7. The method of claim 5 or 6, wherein said metal filling step includes carrying out electroplating treatment to induce each of said metal microbodies to grow from said outwardly projecting recess at said tip portion of each of said micropores.

8. The method of any one of claims 5 to 7 which further comprises, between said metal filling step and said exposure step, a step of placing a base plate on a side of said surface of said substrate.

9. The method of any one of claims 1 to 4, wherein said micropore forming step forms said micropores in such a way that the inside diameter of each of said micropores narrows in said depth direction from said surface of said substrate, including in said outwardly projecting recess of said tip portion.

10. The method of claim 8, wherein said micropores have a tapered shape with a substantially constant angle of taper.

11. The method of claim 9 or 10 which further comprises, between said metal filling step and said exposure step, a step of placing a base plate on a side of said surface of said substrate, and wherein said exposure step removes all of said substrate.

12. The method of any one of claims 1 to 11, wherein said substrate is a dielectric substrate.

13. A microstructure comprising:
a base plate; and
at least one metal microbody which is disposed on said base plate, includes a columnar element that extends in a height direction and a divided projecting element which is provided at a tip portion continuous with said columnar element and has a multiply-divided, narrower branched shape, and generates an enhanced electric field.

14. The microstructure of claim 13, further comprising a substrate having at least one micropore in which is buried said columnar element of said at least one metal microbody except at least said multiply-divided projecting element at said tip portion of said at least one metal microbody.

15. A microstructure comprising:
a base plate; and
at least one metal microbody which is disposed on said base plate, has an outside diameter that narrows from a base end on a base plate side toward a tip portion having a projection with a sharply tapered shape, and generates an enhanced electric field.

16. The microstructure of claim 15, further comprising a substrate having at least one micropore in which is buried a portion of said at least one metal microbody where said outside diameter narrows from the base end thereof on said base plate side toward said tip portion except at least said projection having the tapered shape at the tip portion of said at least one metal microbody.

17. The microstructure of any one of claims 13 to 16, wherein said at least one metal microbody comprises a plurality of metal microbodies uniformly arranged on said base plate.
